Europäisches Patentamt

European Patent Office

Office européen des brevets

(11) Veröffentlichungsnummer: **0 340 395**
**A2**

## (12) EUROPÄISCHE PATENTANMELDUNG

(21) Anmeldenummer: **89102713.8**

(22) Anmeldetag: **17.02.89**

(51) Int. Cl.⁴: **B29C 67/14 , B29C 31/04**

(30) Priorität: **04.05.88 DE 3815063**

(43) Veröffentlichungstag der Anmeldung:
**08.11.89 Patentblatt 89/45**

(84) Benannte Vertragsstaaten:
**AT BE CH DE ES FR GB GR IT LI LU NL SE**

(71) Anmelder: **TECHNOFORM CAPRANO +
BRUNNHOFER KG
Ostring 4
D-3501 Fuldabrück 1(DE)**

(72) Erfinder: **Brunnhofer, Erwin
Ostring 4
D-3501 Fuldabrück(DE)**
Erfinder: **Egen, Uwe, Dr.
Buttlarstrasse 16-20
D-3500 Kassel(DE)**
Erfinder: **Limbach, Will
Vom Alten Tor
D-5210 Troisdorf(DE)**

(74) Vertreter: **Andrejewski, Walter et al
Patentanwälte Andrejewski, Honke & Partner
Postfach 10 02 54 Theaterplatz 3
D-4300 Essen 1(DE)**

(54) Verfahren und Vorrichtung zur Herstellung eines Bauteils aus Kunststoff.

(57) Verfahren zur Herstellung eines Bauteils aus Kunststoff, welches Beanspruchungsbereiche und Zonen reduzierter Beanspruchung und insbes. in den Beanspruchungsbereichen eine Spannungsverteilung mit Vorzugsrichtung der Zugspannungen aufweist, wobei plastifizierter Kunststoff mit Hilfe einer dem Bauteil entsprechenden Form geformt wird. Zunächst werden (z. B. mit den Hilfsmitteln der computergestützten technischen Mechanik und der Methode der finiten Elemente) die Beanspruchungsbereiche des Bauteils ermittelt. Danach wird unter Berücksichtigung der Beanspruchungsbereiche sowie der Bereiche reduzierter Beanspruchung ein Legeplan für den Aufbau des Bauteils aus einem Strang oder aus mehreren Abschnitten eines solchen Stranges aus plastifiziertem Kunststoff hergestellt. Mit Hilfe von zumindest einem Extruder wird zumindest ein Strang aus plastifiziertem Kunststoff erzeugt, der in Strangrichtung erhöhte Werte der Zugfestigkeit aufweist. Dieser Strang bzw. die Abschnitte dieses Stranges werden nach Maßgabe des Legeplans zu dem Bauteil zusammengelegt, wobei die Strangbereiche miteinander stoffschlüssig vereinigt werden. - Auch eine Vorrichtung zur Durchführung des Verfahrens wird angegeben.

## Verfahren und Vorrichtung zur Herstellung eines Bauteils aus Kunststoff

Die Erfindung bezieht sich auf ein Verfahren zur Herstellung eines Bauteils aus thermoplastischem Kunststoff, welches Beanspruchungsbereiche und Zonen reduzierter Beanspruchung und insbes. in den Beanspruchungsbereichen eine Spannungsverteilung mit einer Vorzugsrichtung der Zugspannungen aufweist, wobei plastifizierter Kunststoff mit Hilfe einer dem Bauteil entsprechenden Form geformt wird. Die Erfindung bezieht sich fernerhin auf eine Vorrichtung, welche für die Durchführung eines solchen Verfahrens besonders geeignet ist. - Bei dem Bauteil kann es sich, in bezug auf den Formgebungsvorgang, um ein Fertigteil oder um einen Vorformling handeln, welcher weitergeformt wird. Die Begriffe Beanspruchungsbereich und Spannungsverteilung beziehen sich auf die Beanspruchungen, die das Bauteil bei bestimmungsgemäßer Verwendung aufzunehmen hat. Der Kunststoff kann auf beliebige Weise plastifiziert sein. Insbes. kann es sich um thermoplastifizierten Kunststoff oder auch Gießharz handeln.

Im Rahmen der bekannten Maßnahmen, von denen die Erfindung ausgeht, erfolgt die Formgebung des Bauteils durch Eingießen oder Aufgießen des entsprechend plastifizierten Kunststoffes in eine Form bzw. auf eine Form. Der Ausdruck Form umfaßt auch Platten. Im Rahmen der beikannten Maßnahmen kann auf die Spannungsverteilung in dem Bauteil allenfalls durch besondere, das Flächenträgheitsmoment erhöhende Formgebung oder durch besondere Wanddicken Rücksicht genommen werden. Änlich liegen die Verhältnisse bei der Herstellung solcher Bauteile im Wege des Vakuumtiefziehens oder des Spritzgießens. Allerdings ist es beim Arbeiten mit Gießharz bekannt, in die Form bzw. auf die Form zunächst Bewehrungsfasern einzubringen bzw. aufzubringen und darauf das Gießharz aufzugießen, was einen zusätzlichen, aufwendigen Arbeitsgang darstellt.

Der Erfindung liegt die Aufgabe zugrunde, Bauteile des beschriebenen Aufbaus auf einfache Weise unter Ausnutzung eines Strangpreßvorganges mit Hilfe eines Extruders als wesentliche Maßnahme, herzustellen, und zwar so, daß das fertige Bauteil nach Maßgabe der Spannungsverteilung unterschiedliche Zugfestigkeit aufweist.

Zur Lösung dieser Aufgabe lehrt die Erfindung, daß zunächst die Beanspruchungsbereiche des Bauteils ermittelt werden, daß unter Berücksichtigung der Beanspruchungsbereiche sowie der Bereiche reduzierter Beanspruchung ein Legeplan für den Aufbau des Bauteils aus einem Strang oder aus mehreren Abschnitten eines solchen Stranges aus plastifiziertem Kunststoff hergestellt wird, daß mit Hilfe von zumindest einem Extruder zumindest ein Strang aus plastifiziertem Kunststoff erzeugt wird, der in Strangrichtung erhöhte Werte der Zugfestigkeit aufweist, daß dieser Strang bzw. die Abschnitte dieses Stranges nach Maßgabe des Legeplans zu dem Bauteil zusammengelegt werden, und daß die Stränge bzw. Strangbereiche beim Ablegen miteinander stoffschlüssig vereinigt werden. Die

Beanspruchungsbereiche des Bauteils lassen sich mit den Hilfsmitteln der modernen, computergestützten technischen Mechanik, z. B. unter Verwendung der Methode der finiten Elemente, unschwer und sehr genau ermitteln. Wird das erfindungsgemäße Verfahren so praktiziert, daß es sich bei dem hergestellten Bauteil von vornherein um das fertige, für den Einsatz bestimmte Bauteil handelt, so wird man dafür sorgen, daß die Stränge bzw. Strangbereiche miteinander vollständig stoff schlüssig vereinigt werden, so daß sie gleichsam eine geschlossene Tafel oder eine geschlossene Schale bilden. Dazu kann noch in der Legeform eine Verdichtung oder lediglich eine Pressung durch Anwendung von Druck und Wärme mit Hilfe eines geeigneten Werzeuges erfolgen. Handelt es sich bei dem Bauteil um einen Vorformling, so ist die stoffschlüssige Vereinigung nur bereichsweise oder punktweise erforderlich, weil die endgültige Formgebung im Zuge der Weiterverarbeitung erfolgt, und zwar unter erneuter Plastifizierung zu beliebigen geometrischen Formen, beispielsweise zu geschlossenen Tafeln, Schalen im statischen Sinne u. dgl. Im Rahmen des erfindungsgemäßen Verfahrens kann mit Strängen gearbeitet werden, deren Durchmesser im Millimeterbereich liegt, man kann jedoch, je nach dem herzustellenden Bauteil, auch mit Strängen arbeiten, deren Durchmesser im Zentimeterbereich liegt.

Wie bereits erwähnt, kann das nach dem beschriebenen Verfahren hergestellte Bauteil unter Verwendung einer entsprechenden Legeform in bezug auf die Formgebung gleich als Fertigteil, beispielsweise als einfach gekrümmtes oder doppelt gekrümmtes Bauteil, hergestellt werden. Nach bevorzugter Ausführungsform der Erfindung wird das Bauteil als Vorformling, z. B. als im wesentlichen ebenes Bauteil, aufgebaut und wird der Vorformling danach unter Anwendung von Druck und/oder Wärme in einer Form zu dem fertigen Gegenstand weitergeformt. Insoweit handelt es sich bei der Erfindung um ein zweistufiges Verfahren. Das ebene Bauteil stellt ein Vorprodukt dar, welches zwischengelagert und zu anderen Verarbeitungsstätten transportiert werden kann. Dieses Vorprodukt ist jedoch bezüglich der Zugfestigkeit nach Maßgabe der Beanspruchungen eingerichtet, die das Fertigteil aufzunehmen hat. Das Ablegeprogramm berücksichtigt die in Strangrichtung erhöhten Werte der Zugfestigkeit, aber auch die Tatsache, daß häufig nur bereichsweise erhöhte Zugfestigkeit erforderlich ist. Bei der Weiterverarbeitung des Vorproduktes treten häufig Fließvorgänge auf, die ebenfalls von vornherein bei der Gestaltung und Auslegung des Vorproduktes in festigkeitsmäßiger Hinsicht berücksichtigt werden.

Im Rahmen der Erfindung kann mit einem Strang aus thermoplastifiziertem Kunststoff gearbeitet werden, der durch Molekülorientierung in Strangrichtung erhöhte Werte der Zugfestigkeit aufweist. Im einfachsten Falle reicht für die Erhöhung der Zugfestigkeit die Molekülorientierung aus, die sich beim Strangpressen von thermoplastischem Kunststoff, insbes. beim Strangpressen von Strängen geringen Durchmessers ohnehin einstellt. Insbes. kann insoweit mit sogenannten eigenfaserverstärkten Strängen gearbeitet werden. Im Rahmen der Erfindung wird insbes. mit thermoplastischem Kunststoff gearbeitet. Es besteht dabei die Möglichkeit, mit einem Strang aus thermoplastischem Kunststoff zu arbeiten, der durch eingebettete Bewehrungsfasern in Strangrichtung erhöhte Werte der Zugfestigkeit aufweist. Wie bereits erwähnt, kann mit einem Strang aus thermoplastifiziertem Kunststoff bzw. mit Strängen aus thermoplastifiziertem Kunststoff gearbeitet werden, die nach Maßgabe der Spannungsverteilung in Strangrichtung unterschiedliche Werte der Zugfestigkeit aufweisen. Für spezielle Bauteile mit hohen Anforderungen in bezug auf die mechanische Belastbarkeit bei gleichzeitig geringer Wanddicke empfiehlt es sich, den Strang beim Ablegen mit variabler Zugspannung zu verlegen. Im Rahmen der Erfindung liegt es, beim Zusammenlegen des Stranges bzw. der Stränge zum Bauteil mit mechani schen Hilfsmitteln, wie in die Oberfläche der Ablegeform eingesetzten Bolzen, fixierende Maßnahmen, beispielsweise an Knotenpunkten, zusätzlich zu verwirklichen.

Es versteht sich, daß bei Verwirklichung des erfindungsgemässen Verfahrens beim Ablegen auch in mehreren Legeschichten gearbeitet werden kann.

Gegenstand der Erfindung ist auch eine Vorrichtung für die Durchführung des beschriebenen Verfahrens, und zwar insbes. für die Arbeitsweise mit thermoplastischem Kunststoff. Diese Vorrichtung ist gekennzeichnet durch ein Strangpreßwerkzeug, eine Ablegeform für den aus dem Strangpreßwerkzeug austretenden Strang aus thermoplastifiziertem Kunststoff und eine prorammierbare Steuereinrichtung für eine Relativbewegung des Strangpreßwerkzeuges gegenüber der Ablegeform, die auf das Strangpreßwerkzeug und/oder die Ablegeform arbeitet, wobei die Steuereinrichtung nach Maßgabe des Legeplans programmierbar ist. Das Strangpreßwerkzeug kann an einen entsprechend bewegten Extruder angeschlossen sein oder auch durch einen beweglichen, beheizten Hochdruckschlauch mit einem Extruder verbunden sein. In dem Strangpreßwerkzeug wird eine Molekülorientierung oder eine Orientierung zugegebener Bewehrungsfasern bzw. eine Orientierung der Eigenfaserverstärkung erreicht. Beim Ablegen kann mit einem besonderen Anpreßschuh gearbeitet werden. Nach bevorzugter Ausführungsform der Erfindung ist das Strangpreßwerkzeug an einen Extruder angeschlossen, der eine programmierbare Steuerund Regeleinrichtung für eine Einspeisung von Bewehrungsfasern in den in dem Extruder aufbereiteten Strang aus thermoplastifiziertem Kunststoff nach Maßgabe der zu berücksichtigenden Spannungsverteilung in dem herzustellenden Bauteil aufweist. Die Ablegeform kann erforderlichenfalls beheizbar sein.

Die erreichten Vorteile sind darin zu sehen, daß erfindungsgemäß Bauteile des eingangs beschriebenen Aufbaus auf sehr einfache Weise hergestellt werden können, und zwar unter Anwendung eines Strangpreßwerkzeuges mit Hilfe eines Extruders als sehr wesentliche Verfahrensmaßnahme, die sich in apparativer Hinsicht einfach verwirklichen läßt. Insoweit handelt es sich gleichsam um eine Formteilextrusion. Das hergestellte Bauteil besitzt nach Maßgabe der Spannungsverteilung unterschiedliche Zugfestigkeit. Es versteht sich, daß beim Ablegen auch artfremde, z. B. metallische, Elemente eingeformt werden können.

Im folgenden wird die Erfindung anhand eines besonders einfachen Ausführungsbeispiels mit Zeichnung ausführlicher erläutert. Es zeigen in schematischer Darstellung

Fig. 1 einen Ausschnitt aus einem Bauteil, welches nach dem erfindungsgemäßen Verfahren hergestellt worden ist,

Fig. 2 die Ansicht eines Bauteils, welches durch weitere Formung des Gegenstandes der Fig. 1 hergestellt worden ist und

Fig. 3 einen Schnitt in Richtung A-A durch den Gegenstand nach Fig. 2.

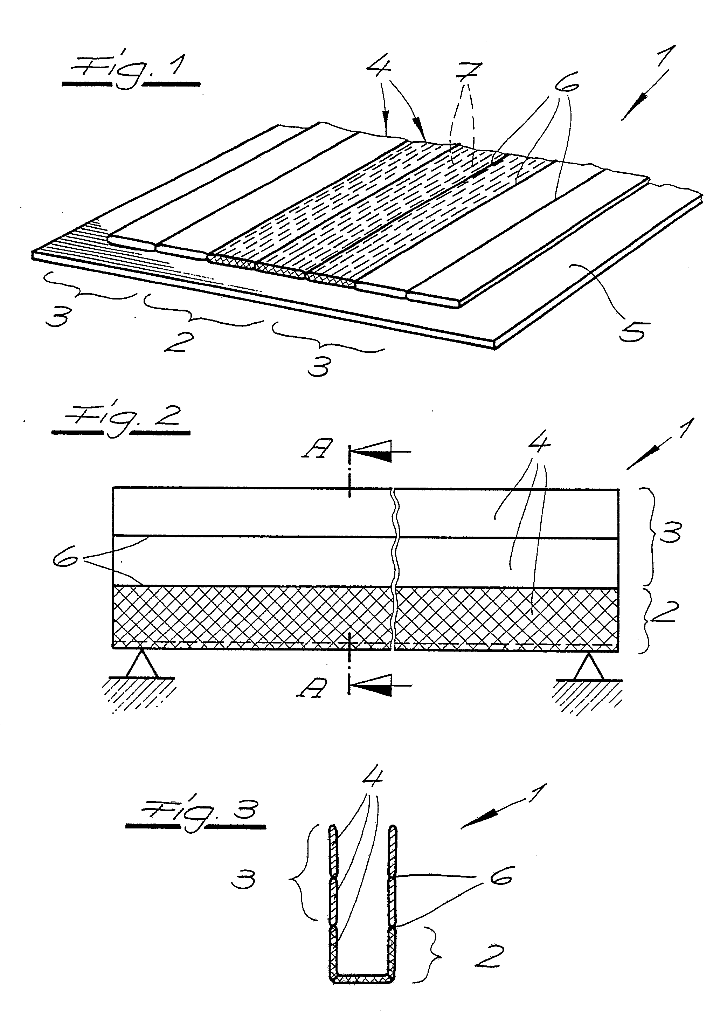

Aus einer vergleichenden Betrachtung der Fig. 1 und 3 entnimmt man ein Bauteil 1 aus thermoplastischem Kunststoff, welches Beanspruchungsbereiche 2 und Zonen reduzierter Beanspruchung 3 aufweist. Die Beanspruchungsbereiche 2 sind in den Figuren besonders schraffiert. Bei dem fertigen Bauteil 1 mag es sich um ein U-profil handeln, welches so belastet wird, wie es in der Fig. 2 dargestellt wurde (Balken auf zwei Stützen). Dadurch entstehen im unteren Bereich Zugspannungen mit einer Vorzugsrichtung, die in Fig. 2 in Längsrichtung des dargestellten Gegenstandes verlaufen. - In Strenge handelt es sich bei Fig. 1 um einen Vorformling, bei den Fig. 2 und 3 um das Fertigteil.

Bei der Herstellung des in den Fig. 2 und 3 dargestellten Gegenstandes wurden zunächst die Beanspruchungsbereiche 2 des Bauteils 1 ermittelt, in denen die schon beschriebenen Zugspannungen auftreten. Dann wurde unter Berücksichtigung der Beanspruchungsbereiche 2 sowie der Bereiche reduzierter Beanspruchungen 3 ein Legeplan für den Aufbau des Bauteils 1 aus einem Strang 4 oder aus mehreren Abschnitten eines solchen Stranges 4 aus themoplastischem Kunststoff hergestellt. Man entnimmt aus der Fig. 1, daß in dem einfach gewählten Ausführungsbeispiel der Legeplan vorgibt, daß Abschnitte eines Stranges 4 aus thermoplastischem Kunststoff zueinander parallel und in gerader Richtung verlegt werden, wobei im Ausführungsbeispiel mit einer ebenen Ablegeform 5 gearbeitet wird. Die Abschnitte des Stranges 4 wurden nach Maßgabe des Legeplans zu dem Bauteil zusammengelegt, wie es die Fig. 1 erkennen läßt. Die nebeneinanderliegenden Strangbereiche wurden miteinander stoffschlüssig vereinigt, d. h. an den Nähten 6 miteinander verschweißt. Dort, wo die Zugspannungen auftreten, befinden sich Strangabschnitte, die durch Molekularorientierung oder Bewehrungsfasern 7 in Längsrichtung eine erhöhte Zugfestigkeit aufweisen. Im Ergebnis erhält man gemäß Fig. 1 ein Bauteil 1, welches grundsätzlich auch als solches eingesetzt werden könnte. Dieses Bauteil 1 ist also als ebenes Bauteil aufgebaut. Im Ausführungsbeispiel wurde dieses ebene Bauteil 1 jedoch danach unter Anwendung von Druck und Wärme in einer nicht gezeichneten Form zu dem in den Fig. 2 und 3 gezeichneten U-Profil weitergeformt. Es versteht sich, daß das Bauteil 1 der Fig. 1 auch aus mehreren Lagen von Strängen 4 aus thermoplastifiziertem Kunststoff aufgebaut werden kann und daß diese Stränge 4 nicht notwendigerweise parallel zueinander verlaufen müssen. Sie können sich vielmehr auch überkreuzen und in mehreren Schichten angeordnet sein.

**Ansprüche**

1. Verfahren zur Herstellung eines Bauteils aus Kunststoff,
welches Beanspruchungsbereiche und Zonen reduzierter Beanspruchung und insbes. in den Beanspruchungsbereichen eine Spannungsverteilung mit Vorzugsrichtung der Zugspannungen aufweist,
wobei plastifizierter Kunststoff mit Hilfe einer dem Bauteil entsprechenden Form geformt wird, **dadurch gekenzeichnet,** daß zunächst die Beanspruchungsbereiche des Bauteils ermittelt werden, daß unter Berücksichtigung der Beanspruchungsbereiche sowie der Bereiche reduzierter Beanspruchung ein Legeplan für den Aufbau des Bauteils aus einem Strang oder aus mehreren Abschnitten eines solchen Stranges aus plastifiziertem Kunststoff hergestellt wird, daß mit Hilfe von zumindest einem Extruder zumindest ein Strang aus plastifiziertem Kunststoff erzeugt wird, der in Strangrichtung erhöhte Werte der Zugfestigkeit aufweist, daß dieser Strang bzw. die Abschnitte dieses Stranges nach Maßgabe des Legeplans zu dem Bauteil zusammengelegt werden, und daß die Stränge bzw. Strangbereiche beim Ablegen miteinander stoffschlüssig vereinigt werden.

2. Verfahren nach Anspruch 1, dadurch gekennzeichnet, daß das Bauteil als Vorformling, z. B. ebenes Bauteil, aufgebaut und der Vorformling danach unter Anwendung von Druck und/oder Wärme in einer Form zu einem Fertigteil weitergeformt wird.

3. Verfahren nach einem der Ansprüche 1 oder 2, dadurch gekennzeichnet, daß ein Strang aus thermoplastischem Kunststoff erzeugt wird, der durch Molekülorientierung in Strangrichtung erhöhte Werte der Zugfestigkeit aufweist.

4. Verfahren nach einem der Ansprüche 1 oder 2, dadurch gekennzeichnet, daß ein Strang aus thermoplastischem Kunststoff erzeugt wird, der durch eingebettete Bewehrungsfasern in Strangrichtung erhöhte Werte der Zugfestigkeit aufweist.

5. Verfahren nach einem der Ansprüche 1 bis 4, dadurch gekennzeichnet, daß mit einem Strang aus thermoplastischem Kunststoff gearbeitet wird, der nach Maßgabe der Spannungsverteilung in Strangrichtung unterschiedliche Werte der Zugfestigkeit aufweist.

6. Vorrichtung für die Durchführung des Verfahrens nach einem der Ansprüche 1 bis 5, gekennzeichnet durch
ein Strangpreßwerkzeug,
eine Ablegeform für den aus dem Strangpreßwerkzeug austretenden Strang aus thermoplastifiziertem Kunststoff und
eine programmierbare Steuereinrichtung für eine Relativbewegung des Strangpreßwerkzeuges gegenüber der Ablegeform, die auf das Strangpreßwerkzeug und/oder die Ablegeform arbeitet,
wobei die Steuereinrichtung nach Maßgabe des Legeplans programmierbar ist.

7. Vorrichtung nach Anspruch 6, dadurch gekennzeichnet, daß das Strangpreßwerkzeug an einen Extruder angeschlossen ist, der eine programmierbare Steuer- und Regeleinrichtung für eine Einspeisung von Bewehrungsfasern in den in dem Extruder aufbereiteten Strang aus thermoplastifiziertem Kunststoff nach Maßgabe der Spannungsverteilung in dem herzustellenden Bauteil aufweist.

8. Vorrichtung nach einem der Ansprüche 6 oder 7, dadurch gekennzeichnet, daß die Ablegeform beheizbar ist.

Fig.1

Fig.2

Fig.3